(19) Europäisches Patentamt
European Patent Office
Office européen des brevets

(11) Numéro de publication : **0 079 836**
**B1**

(12) **FASCICULE DE BREVET EUROPÉEN**

(45) Date de publication du fascicule du brevet : **21.01.87**

(51) Int. Cl.[4] : **C 08 J 3/06**, C 08 L 5/00

(21) Numéro de dépôt : **82402079.6**

(22) Date de dépôt : **15.11.82**

(54) **Compositions à base de gommes hydrosolubles, leur préparation et leur utilisation.**

(30) Priorité : **16.11.81 FR 8121358**

(43) Date de publication de la demande : **25.05.83 Bulletin 83/21**

(45) Mention de la délivrance du brevet : **21.01.87 Bulletin 87/04**

(84) Etats contractants désignés : **BE CH DE FR GB IT LI NL SE**

(56) Documents cités :
**FR-A- 1 524 989**
**FR-A- 2 429 236**
**FR-A- 2 482 118**
**US-A- 3 909 421**
**CHEMICAL ABSTRACTS, vol. 96, no. 6, le 8 février 1982, page 383, no. 40719e, Columbus Ohio (USA); P.A. CIULLO: "Rheological properties of magnesium aluminum silicate/xanthan gum dispersions"**
**"Industrial Gums" 2nd Edition (1973), R.L. Whistler, Academic Press, New York, pages 67, 228, 447, 549, 568, 632, 706, 707**
**Le dossier contient des informations techniques présentées postérieurement au dépôt de la demande et ne figurant pas dans le présent fascicule.**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Chaux, Jean-Bernard**
**31, Chemin du Grand Bois**
**F-69160 Tassin-la-Demi-Lune (FR)**
Inventeur : **Gagne, Pierre**
**23bis, Chemin du Grand Bois**
**F-69160 Tassin-la-Demi-Lune (FR)**
Inventeur : **Garcia, Michel**
**4, rue Galipeau**
**F-92160 Antony (FR)**
Inventeur : **Lespinasse, Dominique**
**Au Batyfran**
**F-01480 Jassans Riottier (FR)**
Inventeur : **Roussos, Josiane**
**37, boulevard d'Argenson**
**F-92200 Neuilly/sur/Seine (FR)**

(74) Mandataire : **Dutruc-Rosset, Marie-Claude et al**
**RHONE-POULENC INTERSERVICES Service Brevets Chimie 25, Quai Paul Doumer**
**F-92408 Courbevoie Cédex (FR)**

**EP 0 079 836 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention est relative à des compositions à base de gommes hydrosolubles, leur préparation et leur utilisation à la confection de sols. Plus précisément, elle se rapporte à des compositions à base de biogommes appartenant à la classe des hétéropolysaccharides d'origine microbienne, facilitant ainsi la mise en solution de la biogomme. L'invention vise particulièrement des compositions à base de Gomme Xanthane permettant d'améliorer sa mise en solution.

On entend par biogomme ou hétéropolysaccharide d'origine microbienne les produits exocellulaires linéaires de poids moléculaire élevé, de préférence, supérieur à un million, obtenus par fermentation d'un hydrate de carbone sous l'action de bactéries du genre Xanthomonas ou Arthrobacter ou des champignons appartenant au genre Selerotium. On désigne, plus particulièrement, par Gomme Xanthane le produit obtenu par fermentation d'un hydrate de carbone sous l'action des bactéries du genre Xanthomonas. La gomme Xanthane est un hétéropolysaccharide de masse moléculaire supérieure à $10^6$. Elle contient du D-glucose, du D-mannose et du D-glucuronate dans les rapports molaires 2,8/2,0/2,0. Elle est partiellement acétylée avec environ 4,7 % de radicaux acétyle. Elle contient aussi environ 3 % de radicaux pyruvate fixés sur une seule chaîne latérale de maille de D-glucopyranosyle comme cétal. Enfin, on définit par le terme « sol », la solution colloïdale de biogomme obtenue.

Certaines de ces biogommes en raison de leurs propriétés de viscosité et de leur rhéologie sont utilisées comme agents épaississants des systèmes aqueux dans de nombreux domaines d'application. C'est ainsi que la Gomme Xanthane est employée dans des domaines aussi variés que le bâtiment, la peinture, le papier, le textile, la cosmétique, le forage pétrolier, l'industrie alimentaire, le traitement des eaux, le phytosanitaire etc...

Pour de nombreuses applications, il est donc nécessaire de mettre la biogomme sous la forme de solution aqueuse. Or l'inconvénient qu'elle présente comme la plupart des gommes hydrosolubles, est d'être difficile à solubiliser. Sous l'effet d'une hydratation trop rapide, les grains au contact de l'eau, s'entourent d'un mince film gélifié et s'agglomèrent. Ces agglomérats ou grumeaux entourés de polymère particulèrement gonflé en surface, se désagrègent et se dissolvent difficilement.

On a proposé d'améliorer la dispersabilité et la solubilité de la Gomme Xanthane par réaction chimique avec le glyoxal (brevet français n° 2 371 462), ou par ajout de silice dans le moût de fermentation ou dans une solution aqueuse de xanthane avant isolement de la gomme, coprécipitation et séchage (FR-A-2 482 118). On a également proposé d'accroître la viscosité des milieux aqueux de polymères hydratables par addition simultanée du polymère et d'une argile sèche (US-A-3 909 421).

Le procédé de l'art antérieur nécessite un traitement particulier de la gomme. Il était donc souhaitable de perfectionner la mise en solution des biogommes.

Un des objectifs de l'invention est d'améliorer la facilité de dispersion de la biogomme dans l'eau ainsi que d'augmenter la vitesse de dissolution, donc la vitesse de développement de la viscosité des solutions obtenues, par adjonction d'additifs, tout en conservant à la gomme ses propriétés rhéologiques.

Un autre objectif de l'invention est de disposer de la biogomme sous la forme d'une poudre aisément manipulable, qui se dissolve bien et gonfle rapidement dans l'eau.

Enfin, un dernier objectif est d'obtenir les résultats souhaités et présentant la biogomme sous forme de compositions « poudre » ayant la plus forte teneur en matière active.

La présente invention a pour objet des compositions à base de gommes hydrosolubles facilitant leur dissolution caractérisées par le fait qu'elles sont obtenues par mélange à sec d'une biogomme et d'un matériau apportant de l'eau, qui peut être soit de l'eau liée ou d'adsorption, soit de l'eau de cristallisation, la quantité d'eau apportée par ledit matériau étant telle que le rapport pondéral biogomme/eau est compris entre 6,5 et 0,74 et le rapport pondéral matériau apportant l'eau (en sec)/eau est compris entre 0,3 et 2,6.

Dans l'exposé qui suit de la présente invention, on précisera la nature des constituants des compositions de l'invention.

Comme mentionné précédemment, la biogomme est obtenue par fermentation d'un hydrate de carbone sous l'action de bactéries du genre Xanthomonas, Arthrobacter ou champignons appartenant au genre Sclerotium.

Les espèces représentatives de bactéries ou de champignons, dont on peut se servir pour la fabrication de ces hétéropolysaccharides comprennent par exemple : le Xanthomonas Begoniae, le Xanthomonas Campestris, le Xanthomonas Carotea, le Xanthomonas Hederae, le Xanthomonas Incanae, le Xanthomonas Malvacearum, le Xanthomonas Papavericola, le Xanthomonas Phaseoli, le Xanthomonas Pisi, le Xanthomonas Vasculorum, le Xanthomonas Vesicatora, le Xanthomonas Vitians, le Xanthomonas Pelargonii ; l'Arthrobacter Stabilis, l'Arthrobacter Viscosus ; le Sclerotium Glucanicum, le Sclerotium Rolfsii.

Les espèces qui sont particulièrement adaptées à ce type de fermentation comprennent le Xanthomonas Begoniae, le Xanthomonas Campestris, le Xanthomonas Incanae et le Xanthomonas Pisi.

L'espèce Xanthomonas Campestris convient tout particulièrement bien pour la fabrication de la biogomme.

On peut faire fermenter toute une variété d'hydrates de carbone avec les micro-organismes

appartenant aux genres précités pour fabriquer l'hétéropolysaccharide utilisé dans les compositions de l'invention. Les hydrates de carbone qui peuvent convenir comprennent le glucose, le saccharose, le fructose, le maltose, le lactose, l'amidon soluble, l'amidon de maïs, l'amidon de pomme de terre. La fermentation de l'hydrate de carbone se fait en général dans un milieu aqueux renfermant jusqu'à 60 g/l de glucide. On sait que le milieu de fermentation peut comprendre, en outre, une source de phosphore, une source de magnésium qui est un activateur d'enzymes et une source d'azote qui est habituellement constituée par des « solubles de distilleries » (brevet américain n° 3 000 790), du son ou des farines de grains entiers tels que le sorgho, le soja ou le maïs (cf. brevet américain n° 3 271 267), du « corn steep » (cf. brevet américain N° 3 355 447), ou encore des composés azotés minéraux tels que le nitrate d'ammonium (cf. brevet américain n° 3 391 060) ou le phosphate d'ammonium (cf. demande de brevet français n° 76/05933).

Il peut être avantageux, avant emploi, de soumettre le moût fermenté à un chauffage dans un domaine de température de 80 à 130 °C pendant environ 10 minutes à environ 1 heure.

L'hétéropolysaccharide est isolé du moût de fermentation et est utilisé sous forme de poudre. La séparation de l'hétéropolysaccharide du moût, éventuellement chauffé au préalable comme indiqué ci-avant, peut se faire grâce aux méthodes habituelles, par exemple en le précipitant par addition à ce moût d'un alcool inférieur comme le méthanol, l'éthanol, l'isopropanol, le butanol tertiaire ou d'acétone ou d'un mélange de ces agents de précipitation. Une fois précipité, l'hétéropolysaccharide est séparé, lavé avec le liquide de précipitation, puis il est séché et broyé.

On peut éventuellement soumettre l'hétéropolysaccharide à des opérations ultérieures de purification : on peut faire appel dans cette optique aux méthodes connues de l'art antérieur consistant par exemple à soumettre le moût fermenté, ou bien le gel aqueux reconstitué à partir de l'hétéropolysaccharide extrait du moût, à des opérations de centrifugation ou de filtration sur terres à diatomées, à l'action des enzymes du type protéase (cf. brevet français n° 2 264 077) ou de la soude (cf. brevet américain n° 3 729 460).

D'une manière préférentielle, on emploie la Gomme Xanthane obtenue par fermentation d'un hydrate de carbone par une culture pure de Xanthomonas Campestris ; ladite gomme étant extraite à l'isopropanol, séchée puis broyée.

Le matériau apportant l'eau, amène de l'eau qui peut être soit de l'eau liée ou d'adsorption, soit de l'eau de cristallisation. Appartiennent à la première catégorie de matériaux, les silices et les alumines hydratées mises en œuvre seules ou en mélange sous n'importe quelle forme naturelle ou synthétique.

C'est ainsi que l'on peut faire appel à des silices fines précipitées, se présentant sous la forme de particules fines à grande surface. Plus particulièrement, on a recours à des silices qui présentent une surface BET comprise entre 200 et 400 $m^2/g$. (La surface BET est déterminée selon la méthode de Brunauer-Emmett-Teller décrite dans « The Journal of the American Chemical Society » *60* — page 309, Février 1938). Le diamètre des particules ultimes de silice varient entre 20 et 80 nm (200 et 800 Å).

Conviennent, également à l'invention les gels de silice hydratés en particulier les trois principaux types de gels qui sont : les gels avec une surface BET de 750-800 $m^2/g$, un volume poreux de 0,37-0,40 $cm^3/g$, un diamètre moyen de particules de 2,2-2,6 nm (22-26 Å) ; les gels avec une surface BET de 300-350 $m^2/g$, un volume poreux de 0,9-1,1 $cm^3/g$, un diamètre moyen de particules 12-16 nm (120-160 Å) ; les gels ayant une surface BET de 100-200 $m^2/g$, un volume poreux de 1,4-2,0 $cm^3/g$, un diamètre moyen de particules de 18-22 nm (180-220 Å).

On peut aussi utiliser les gels de silice déshydratés qui présentent des surfaces BET de 10 à 500 $m^2/g$ ayant un volume poreux de 0,5 à 1,1 $cm^3/g$ et un diamètre poreux moyen variant de 3 à 300 nm (30 à 3 000 Å), de préférence de 60 à 300 nm (600 à 3 000 Å). Un traitement d'autoclavage décrit dans le brevet français 2 093 176 permet d'amener la silice, à la surface désirée.

Le matériau apportant l'eau peut être un hydrate d'alumine sous les deux formes d'hydratation : $Al_2O_3$, $3H_2O$ et $Al_2O_3$, $H_2O$. On peut les mettre en œuvre sous forme naturelle : hydrargillite ou gibbsite, bayerite, nordstrandite, bohmite, diaspore ou sous leur forme synthétique. On peut utiliser des gels d'alumine séchés du type bohmite qui présentent une surface de 200 à 400 $m^2/g$ et des pores de 5 à 10 nm (50 à 100 Å) ou les différents produits commercialisés, en particulier, l'$\alpha$-trihydrate obtenu selon le procédé Bayer ayant des particules sphéroidales avec des dimensions de 20 à 150 $\mu m$. Tous les composés précités sont des produits connus et décrits par exemple, dans l'encyclopédie « Encyclopedia Chemical Technology — Kirk Othmer — Volume 2 ».

On peut également faire appel aux silicates d'aluminium hydratés sous la forme des argiles, des zéolithes naturelles ou des zéolithes synthétiques.

Comme exemples d'argiles susceptibles d'être employées, on peut citer celles qui appartiennent aux groupes suivants :

— type kaolin ; kaolinite, dickite, nacrite, anauxite, halloysite, endelitte ;
— type serpentine ; chrysolite, amésite, cronstedite, chamosite, garnierite ;
— type montmorillonite ; montmorillonite (bentonite), beidellite, nontronite, hectorite, saponite, sauconite ;
— type vermiculite ou chlorite ;
— l'attapulgite ou la sépiolite.

On peut mettre en œuvre des zéolithes naturelles telles que : analcime, harmotome, phillipsite, gismondine, laumontite, erionite, offretite, levynite, faujasite, chabazite, gmelinite, natrolite, scolecite, mésolite, thomsonite, edingtonite, mordénite, ferrierite, epistilbite, heulandite, clinoptilolite, stilbite, brewsterite. D'une manière préférentielle, on choisit la faujasite ou la mordénite.

En ce qui concerne les zéolithes synthétiques, on peut utiliser les zéolithes commercialisées et qui sont : les zéolithes de type A, X, Y, L et celles qui reproduisent la structure de la mordénite, la chabazite et l'érionite. Les zéolithes X, Y présentent, généralement une surface BET de 800 $m^2/g$ et un volume poreux respectivement de 0,36 $cm^3/g$ et 0,34 $cm^3/g$. Les zéolithes de type A, plus particulièrement de type 4A ont une surface BET inférieure à 10 $m^2/g$ et un volume poreux de 0,30 $cm^3/g$.

Pour une description détaillée des silicates d'amuminium hydratés, on se référera à la littérature : par exemple, pour les argiles à l'Encyclopédie « Encyclopedia Chemical Technology — Kirk Othmer — Volume 5 » et pour les zéolithes naturelles et synthétiques à l'ouvrage de Donald W. Breck — Zeolite Molecular Sieves, A-Wiley Interscience Publication — 1974.

Enfin comme matériau apportant l'eau, on peut également avoir recours aux hydrates des sels minéraux ou organiques des métaux, plus particulièrement des métaux alcalins ou alcalino-terreux. Plus spécifiquement, on peut citer les hydrates des sels suivants ou dérivés mis en œuvre seuls, en mélange ou sous forme de combinaisons : les carbonates, les halogénures, les nitrates, les phosphates, les silicates, les sulfates ainsi que les acétates, les citrates, les lactates, les laurates, les tartrates des sels de sodium, potassium, calcium, magnésium. A titre d'exemples spécifiques, on peut nommer :

— acétate de sodium trihydraté : $NaC_2H_3O_2, 3H_2O$
— carbonate de sodium heptahydraté : $Na_2CO_3, 7H_2O$
— carbonate de sodium décahydraté : $Na_2CO_3, 10H_2O$
— citrate de sodium pentahydraté : $Na_3C_6H_5O_7, 5{,}5H_2O$
— orthophosphate de sodium dodécahydraté : $Na_3PO_4, 12H_2O$
— tartrate de magnésium et de sodium décahydraté : $Na_2Mg(C_4H_4O_6)_2, 10H_2O$
— sulfate de sodium heptahydraté : $Na_2SO_4, 7H_2O$
— sulfate de sodium décahydraté : $Na_2SO_4, 10H_2O$
— chlorure de potassium et de magnésium hexahydraté : $KCl, MgCl_2, 6H_2O$
— carbonate de calcium hexahydraté : $CaCO_3, 6H_2O$
— chlorure de calcium hexahydraté : $CaCl_2, 6H_2O$
— lactate de calcium pentahydraté : $Ca(C_3H_5O_3)_2, 5H_2O$
— nitrate de calcium tétrahydraté : $Ca(NO_3)_2, 4H_2O$
— tartrate de calcium tétrahydraté : $CaC_4H_4O_6, 4H_2O$
— acétate de magnésium tétrahydraté : $Mg(C_2H_3O_3)_2, 4H_2O$
— carbonate de magnésium pentahydraté : $MgCO_3, 5H_2O$
— chlorure de magnésium hexahydraté : $MgCl_2, 6H_2O$
— nitrate de magnésium hexahydraté : $Mg(NO_3)_2, 6H_2O$
— orthophosphate de magnésium octahydraté : $Mg_3(PO_4)_2, 8H_2O$
— sulfate de magnésium heptahydraté : $MgSO_4, 7H_2O$
— tartrate de magnésium pentahydraté : $MgC_4H_4O_6, 5H_2O$

Dans l'ensemble des matériaux apportant l'eau précités, on choisit préférentiellement les silices fines précipitées qui sont capables d'adsorber 2 ou 3 fois leur poids d'eau.

On a constaté de manière inattendue que, le fait d'associer la biogomme avec un matériau capable de se lier à une quantité d'eau suffisante conduisait à une augmentation de la vitesse de dissolution de la biogomme.

Poursuivant ses recherches, la demanderesse a trouvé que les résultats obtenus étaient le plus souvent supérieurs lorsque l'on adjoignait un deuxième additif tel qu'un tensio-actif de type anionique et/ou non ionique.

Une forme de réalisation préférentielle de l'invention consiste donc en des compositions à base de gomme hydrosoluble à dissolution améliorée caractérisées par le fait qu'elles comprennent outre la biogomme, un matériau apportant l'eau ou susceptible de la retenir par adsorption, un tensio-actif anionique et/ou non ionique.

Pour le choix de l'agent tensio-actif, on peut se reporter, entre autres, à l'encyclopédie « Encyclopedia Chemical Technology — Kirk Othmer — volume 19 » ou aux différents ouvrages de la Série Surfactant Sciences Series, Marcel Dekker Inc — Vol. 1 : Nonionic Surfactants de Martin J. SCHICK ; Vol. 7 : Anionic Surfactants de Warner M. Linfield ou à l'ouvrage de Mc. Cutcheon's : Detergents and Emulsifiers — International and North American Edition.

Comme exemples d'agents tensio-actifs anioniques utilisables, on peut citer :

— les savons de métaux alcalins tels que les sels sodiques ou potassiques d'acides gras saturés ou insaturés ayant de 8 à 24 atomes de carbone et de préférence de 14 à 20 ou des dérivés d'acides aminocarboxyliques comme le N-lauryl sarconisate de sodium, le N-acylsarconisate de sodium.

— les sulfonates alcalins tels que les alcoylsulfonates, les arylsulfonates ou les alcoylarylsulfonates ; en particulier les alcoylsulfonates tels que par exemple les diesters de l'acide sulfosuccinique comme le

diéthylhexylsulfosuccinate de sodium, le dioctylsulfosuccinate de sodium, les alcoylbenzènesulfonates de formule $R_1—C_6H_4\ SO_3\ M_1$ dans laquelle le radical $R_1$ est un radical alcoyle linéaire ou ramifié contenant de 8 à 13 atomes de carbone tel que par exemple un radical nonyle, dodécyle, tridécyle et $M_1$ représente un atome de sodium, de potassium, un radical ammonium, de la diéthanolamine ou de la triéthanolamine ; les alcoylnaphtalènesulfonates de formule $(R)_{no}—C_{10}H_{7—no}SO_3M_1$ dans laquelle no est un nombre variant entre 1 et 3 et le radical R est un radical alcoyle linéaire ou ramifié contenant de 1 à 4 atomes de carbone tel que par exemple un radical méthyle, isopropyle, isobutyle et $M_1$ ayant la signification donnée précédemment. D'autres sulfonates peuvent être employés tels que les N-acyl, N-alcoyltaurates de formule $R_2—CO—N(R'_2)—CH_2—CH_2—SO_3Na$ où $R_2$ est un radical alcoyle ayant de 11 à 18 atomes de carbone et $R'_2$ est un radical méthyle, éthyle : comme par exemple le N-oléoyl, N-méthyltaurate ou le N-palmitoyl, N-méthyltaurate de sodium : les oléfines sulfonées résultant de la sulfonation des coupes d'oléfines linéaires de $C_{14}$ à $C_{18}$.

— les sulfates et les produits sulfatés : parmi les sulfates d'alcoyle répondant à la formule $R_3OSO_3\ M_1$, on peut citer ceux où le radical $R_3$ est un radical lauryle, cétyle, myristyle et $M_1$ ayant la signification donnée précédemment : les huiles et graisses naturelles sulfatées ; le sel disodique de l'acide oléique sulfaté ; les alcools gras polyoxyéthylénés et sulfatés de formule $R_4—(O—CH_2—CH_2)_{n1}—OSO_3M_1$ dans laquelle le radical $R_4$ est un radical alcoyle contenant de 6 à 16 atomes de carbone tel que par exemple un radical myristyle ou un radical alcoyle linéaire ou ramifié comme par exemple un radical hexyle, octyle, décyle, dodécyle, $n_1$ est le nombre de moles d'oxyde d'éthylène pouvant varier de 1 à 4 et $M_1$ ayant la signification donnée précédemment ; les alcoylphénols polyoxyéthylénés et sulfatés de formule $R_5—C_6H_4—(O—CH_2—CH_2)_{n2}—OSO_3M_1$ dans laquelle le radical $R_5$ est un radical alcoyle linéaire ou ramifié contenant de 8 à 13 atomes de carbone tel que par exemple un radical octyle, nonyle, dodécyle, $n_2$ est le nombre de moles d'oxyde d'éthylène pouvant varier de 1 à 6 et $M_1$ ayant la signification donnée précédemment.

— les phosphates alcalins : les mono- ou diesters de l'acide orthophosphorique ou l'un de ses sels qui peuvent être représentés pour les phosphates d'alcoyle par la formule $(R_6O)\ PO\ (OM_2)_2$ et pour les phosphates de dialcoyle par la formule $(R_6O)_2\ PO\ (OM_2)$ dans lesquelles le radical $R_6$ est un radical alcoyle linéaire ou ramifié contenant de 6 à 12 atomes de carbone et $M_2$ représente un atome d'hydrogène, de sodium ou de potassium. A titre d'exemples de radical $R_6$, on peut citer le n-hexyle, n-octyle, n-éthylhexyle, diméthylhexyle, n-décyle, diméthyloctyle, triméthylheptyle, tri-méthylnonyle ; les mono- ou diesters de l'acide orthophosphorique ou l'un de ses sels, polyoxyéthylénés qui peuvent être représentés pour les phosphates d'alcoyle polyoxyéthylénés par la formule

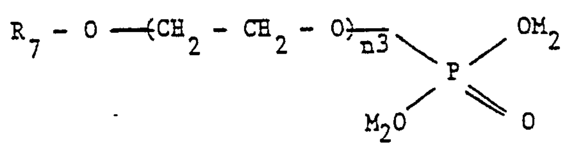

et pour les phosphates de dialcoyle polyoxyéthylénés par la formule

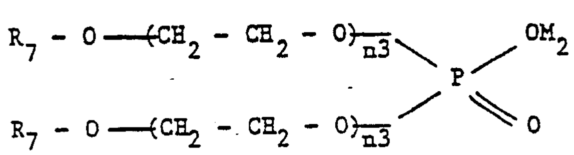

dans lesquelles le radical $R_7$ représente un radical alcoyle linéaire ou ramifié ayant de 6 à 12 atomes de carbone, un radical phényle, un radical alcoylphényle avec une chaîne alcoyle ayant de 8 à 12 atomes de carbone, $n_3$ est le nombre d'oxyde d'éthylène pouvant varier de 2 à 8 et $M_2$ ayant la signification donnée précédemment. Comme exemples de radical $R_7$, on peut nommer le radical hexyle, octyle, décyle, dodécyle, nonylphényle.

Comme agents tensio-actifs non ioniques, on peut faire appel d'une manière générale à des composés obtenus par condensation d'oxyde d'alcoylène avec un composé organique qui peut être aliphatique ou alcoylaromatique. Les tensio-actifs non ioniques appropriés sont :

— les alcoylphénols polyoxyéthylénés par exemple les produits de condensation d'oxyde d'éthylène à raison de 5 à 25 moles par mole d'alcoylphénol, le radical alcoyle étant droit ou ramifié et contenant de 6 à 12 atomes de carbone. On peut citer tout particulièrement le nonylphénol condensé avec environ 10 à 30 moles d'oxyde d'éthylène par mole de phénol, le dinonylphénol condensé avec 15 moles d'oxyde d'éthylène par mole de phénol, le dodécylphénol condensé avec 12 moles d'oxyde d'éthylène par mole de phénol.

— les alcools aliphatiques polyoxyéthylénés résultant de la condensation avec l'oxyde d'éthylène à raison de 5 à 30 moles d'oxyde d'éthylène, d'alcools gras linéaires ou ramifiés contenant de 8 à 22 atomes de carbone : par exemple le produit de condensation d'environ 15 moles d'oxyde d'éthylène avec 1 mole de tridécanol ou d'alcool de coprah : l'alcool myristylique condensé avec 10 moles d'oxyde d'éthylène.

— les amides gras tels que par exemple le diéthanolamide d'acide gras éventuellement polyoxyéthylénés comme l'acide laurique ou de l'huile de coco,

— les dérivés polyoxyéthylénés et polyoxypropylénés : une illustration de ce type de tensio-actifs sont les produits bien connus vendus sous le nom de « PLURONICS ». On les obtient par addition séquentielle d'oxyde de propylène puis d'oxyde d'éthylène sur un composé à hydrogène réactif de bas poids moléculaire tel que par exemple, le propylèneglycol.

Afin que le tensio-actif s'incorpore facilement aux compositions de l'invention, il est introduit sous forme solide, de préférence pulvérulente.

Les tensio-actifs se présentent sous forme solide et le plus couramment sous forme liquide. Dans le cas d'un tensio-actif liquide, il doit être déposé sur un support pulvérulent capable de l'adsorber et de le désorber, chimiquement inerte, insoluble ou soluble. On peut l'adsorber directement sur la poudre constituée par le matériau apportant l'eau éventuellement additionné d'eau.

D'une manière préférentielle on choisit un tensio-actif solide tel que les alcoylnaphtalènesulfonates de sodium en particulier le diisopropylnaphtalènesulfonate de sodium.

Les compositions à base de biogomme conformes à l'invention comprennent les trois constituants précités dans les proportions suivantes :

La quantité d'eau présente dans lesdites compositions et amenée par le matériau apportant l'eau exprimée par le rapport pondéral (biogomme/eau) varie de 6,5 à 0,74, de préférence 2,5 à 1. Il est préférable que le rapport ne dépasse pas 4.

La quantité de matériau apportant l'eau est définie par le rapport pondéral (matériau apportant l'eau (en sec)/eau) qui est de préférence compris entre 0,3 et 0,6 bien qu'il puisse être choisi dans une gamme plus large allant de 0,3 à 2,6.

La quantité de tensio-actifs mise en jeu définie par le rapport entre le poids du tensio-actif et le poids total de la composition de l'invention peut varier entre 0 et 0,10. La limite supérieure n'a aucun caractère critique mais il n'y a aucun intérêt à atteindre des rapports pondéraux supérieurs à 0,25. Préférentiellement la quantité de tensio-actif est choisie de telle sorte que ledit rapport soit compris entre 0,03 et 0,07.

On donne, ci-après, des exemples de compositions à base de biogomme selon l'invention :

— de 30 à 70 % en poids de biogomme
— de 7 à 40 % en poids d'un matériau apportant l'eau
— de 0 à 10 % en poids d'un tensio-actif anionique et/ou non ionique
— de 15 à 37 % en poids d'eau.

Les compositions préférées sont les suivantes et contiennent :

— de 50 à 60 % en poids de biogomme
— de 8 à 15 % en poids d'un matériau apportant l'eau
— de 3 à 7 % en poids d'un tensio-actif anionique et/ou non ionique
— de 24 à 36 % en poids d'eau.

Pour ce qui est de la préparation des compositions de l'invention, elle varie légèrement selon que l'eau de la composition est de l'eau amenée par apport extérieur ou de l'eau de cristallisation et selon que le tensio-actif se trouve sous forme solide ou liquide.

Le procédé de préparation des compositions de l'invention consiste à mélanger à sec le matériau apportant l'eau sur lequel éventuellement, on a adsorbé de l'eau, avec la biogomme et éventuellement à ajouter un tensio-actif anionique et/ou non ionique.

La première opération qui est l'imprégnation du matériau apportant l'eau, avec l'eau concerne les matériaux suivants : les silices fines précipitées, les gels de silice déshydratés, les hydrates d'alumine et les silicates d'aluminium hydratés. On ajoute progressivement, sous agitation, l'eau sur le matériau apportant l'eau. Elle n'est pas réalisée lorsque l'on choisit, à titre de matériaux apportant l'eau, les gels de silice hydratés, les hydrates de sels minéraux ou organiques.

Le matériau apportant l'eau est sous la forme d'une poudre sèche même lorsqu'il a subi une imprégnation à l'eau. On effectue ensuite son mélange avec la biogomme dans un mélangeur à poudres de type connu par exemple les mélangeurs à chute libre du type tambour, les mélangeurs verticaux ou horizontaux à vis hélicoïdale ou les mélangeurs horizontaux type Lödige.

L'introduction d'un tensio-actif dans la composition de l'invention se fait lorsqu'il est solide, dans le mélange constitué par le matériau apportant l'eau et la biogomme. Si le tensio-actif se présente sous forme liquide, il est généralement adsorbé sur le matériau apportant l'eau simultanément ou successivement à l'eau puis on effectue ensuite le mélange avec la biogomme.

Une fois tous les composants introduits dans le mélangeur, on poursuit le mélange. La durée de l'opération est fonction de l'appareil utilisé et sera aisément déterminée par l'homme de métier de telle sorte qu'il obtienne un mélange homogène.

Le procédé de l'invention conduit à l'obtention de compositions sous la forme d'une poudre ayant une excellente stabilité au stockage.

Conformément à l'invention, on prépare des sols avec les compositions de l'invention.

La confection desdits sols est réalisée, simplement, par addition de la composition poudre au milieu aqueux mis sous agitation, par des moyens classiques d'agitation, par exemple agitation à ancre, à hélice ou à turbine.

L'introduction de la composition de l'invention dans l'eau peut se faire rapidement en une seule fraction sans inconvénient. Elle ne nécessite pas de précautions particulières.

La quantité de composition introduite est telle que, généralement, la concentration du sol en biogomme varie de 0,2 à 2 % en poids.

On maintient ensuite l'agitation jusqu'à obtention d'une viscosité constante : habituellement, des durées variant de 10 à 30 minutes suffisent.

Grâce à la mise de la biogomme sous la forme des compositions de l'invention, on note une amélioration de la mise en solution de la biogomme ainsi qu'une augmentation de la vitesse de développement de la viscosité maximale des sols obtenus et tout particulièrement lorsque la biogomme est mise en solution sous faible agitation. A titre d'exemples, on peut citer la viscosité d'un sol à 0,5 % en Gomme Xanthane dans une eau de ville à 25 °HT (soit 100 mg/l d'ions $Ca^{++}$) mesurée à 23 °C au viscosimètre Brookfield modèle LVT, à la vitesse de 10 tours/minute avec le plongeur n° 2 et la viscosité d'un sol ayant la même concentration en Gomme Xanthane mais préparé avec une composition de l'invention renfermant :

— 60 % en poids de Gomme Xanthane
— 8,75 % en poids d'une silice précipitée ayant une surface BET de 250 $m^2/g$
— 5 % en poids de diisopropylnaphtalènesulfonate de sodium
— 26,25 % en poids d'eau.

Avec la composition de l'invention, la viscosité maximale du sol de 1 800 mPa · s est pratiquement atteinte au bout de 15 minutes alors que la viscosité du sol de la Gomme Xanthane seule et seulement de 600 mPa · s au bout de 15 minutes et de 1 300 mPa · s au bout de 30 minutes, la viscosité maximale n'est pas obtenue avant une durée d'au moins 1 heure.

On remarquera que les sols obtenus avec les compositions de l'invention sont parfaitement stables dans les conditions habituelles de stockage ce qui est nettement mis en évidence dans les exemples.

Pour permettre de mieux illustrer la mise en œuvre de l'invention on donne ci-après différents exemples, bien entendu non limitatifs.

Dans tous les exemples, l'hétéropolysaccharide utilisé est la Gomme Xanthane commercialisée par la Société Rhône Poulenc sous la dénomination commerciale Rhodopol 23, dont les spécifications sont les suivantes :

| | |
|---|---|
| — Aspect | poudre couleur crème |
| — Densité apparente g/$cm^3$ | 0,8 |
| — Matière active | 90 % |
| — Cendres | 10 % |
| — Humidité | 10 % |
| — pH (sol à 1 % dans l'eau distillée) | 7 |
| — Viscosité Brookfield LVT 30 M, aiguille n° 4 | 2 200-3 000 cps |
| — Dimensions de particules : | |

particules $< 75$ µm $< 30$ %
$> 297$ µm $< 2$ %

Avant de détailler les exemples, on précisera les conditions opératoires de préparation des compositions de l'invention et de leurs sols : conditions reproduites dans tous les exemples sauf stipulation contraire.

Le mode de préparation des compositions est le suivant :

— on fait adsorber l'eau, si nécessaire, au matériau apportant l'eau, dans le rapport choisi. Pour ce faire, dans un bécher, contenant ledit matériau, on verse lentement l'eau sous agitation,
— on ajoute la Gomme Xanthane au matériau imprégné d'eau et on mélange,
— enfin, on additionne le tensio-actif solide,
— on homogénéise la composition pendant une durée d'une heure dans un mélangeur à poudres.

Les conditions de préparation des sols sont les suivantes : pour chaque essai, on confectionne 400 g de sol,

— dans un bécher équipé d'un système d'agitation du type cadre tournant à la vitesse de 100 tours/minute, on introduit 400 g d'eau qui est de l'eau de ville ayant une dureté de 25 °HT,
— on verse rapidement la composition en poudre en quantité voulue : la durée d'addition étant inférieure à 30 secondes,
— on maintient l'agitation jusqu'à obtention d'une viscosité constante.

Il y a lieu de noter que le test de mise en solution est rendu sévère par le choix de conditions douces d'agitation et permet ainsi de suivre l'amélioration de la dispersabilité : toute vitesse supérieure ne pourra être que bénéfique. L'agitateur utilisé est une pale cadre qui est placée dans la solution de telle façon que la partie supérieure affleure la surface de l'eau de manière à aider le mouillage de la poudre versée sur l'eau.

Les exemples suivants illustrent différentes compositions de l'invention, avec ou sans tensio-actifs. On compare les propriétés des sols obtenus avec les compositions de l'invention à des sols de Gomme Xanthane seule.

Dans tous les exemples, les pourcentages sont exprimés en poids.

Exemples 1 et 2

1°) Préparation des compositions à base de Gomme Xanthane

On réalise les compositions suivantes en mettant en œuvre de la Gomme Xanthane, à titre de matériaux apportant l'eau, une silice précipitée légère et un tensio-actif anionique qui est un diisopropylnaphtalène sulfonate de sodium (exemple 1) additionné éventuellement d'un tensio-actif non ionique qui est un nonylphénol condensé avec 10 moles d'oxyde d'éthylène (exemple 2).

Les caractéristiques et les proportions des composants sont données ci-après.

| | COMPOSITION 1 | COMPOSITION 2 |
|---|---|---|
| Gomme Xanthane (Rhodopol 23) | 33,3 % | 20 % |
| Silice précipitée (Tixosil 38A) | 22,2 % | 30 % |
| Diisopropylnaphtalènesulfonate de sodium (Supragil WP) | 4,5 % | 3 % |
| Nonylphénol à 10 O.E. (Cémulsol NP 10) | - | 20 % |
| Eau de ville | 40 % | 27 % |

Le Tixosil 38 A est une silice précipitée ayant une surface BET de 250 m²/g et un volume poreux pour des pores de taille variant entre 40 et 2 500 nm de 1,80 cm³/g de silice et une humidité à 105 °C inférieure à 7 %.

Le Supragil WP est un diisopropylnaphtalènesulfonate de sodium, tensio-actif anionique se présentant sous forme solide. Plus précisément, il répond à la formule $(C_3H_7)_{no}C_{10}H_{7-no}SO_3Na$ avec no = 1,8.

Le Cémulsol NP 10 est un nonylphénol condensé avec 10 moles d'oxide d'éthylène, tensio-actif non ionique liquide.

La préparation des compositions est effectuée selon les conditions précédemment décrites, sauf que le tensio-actif liquide est adsorbé sur la silice dans les mêmes conditions que l'eau, avant l'addition de la Gomme Xanthane.

2°) Préparation des sols

On prépare des sols avec les compositions prédéfinies aux concentrations suivantes exprimées en poids de Gomme Xanthane commercialisée c'est-à-dire, à environ 10 % d'humidité : 0,2 %-0,3 %-0,5 %-1 %.

On effectue une série d'essais témoins dans lesquels il n'y a que de la Gomme Xanthane.

Les conditions opératoires de préparation des sols sont celles données avant la description des exemples, à la différence près que la vitesse d'agitation est de 400 tours/minute, au lieu de 100 tours/minute.

3°) Etude des sols

a — mesures des viscosités

La viscosité des sols obtenus avec les compositions de l'invention et la Gomme Xanthane, est fonction de la concentration du biopolymère : elle est déterminée pour des concentrations de 0,2 %, 0,3 %, 0,5 % et 1 % en Gomme Xanthane.

Les mesures de viscosités sont faites à 23 °C à l'aide d'un viscosimètre BROOKFIELD, modèle RV à la vitesse de 10 tours/minute avec les plongeurs n° 2 pour les concentrations 0,2 %-0,3 %-0,5 % et n° 3 pour la concentration 1 %.

Les mesures sont effectuées après 5, 10, 30 et 45 minutes d'agitation puis après 24 heures de repos.

Les résultats obtenus pour les compositions 1 et 2 des exemples 1 et 2 et pour la Gomme Xanthane de l'essai A sont rassemblés respectivement dans les tableaux I et II. On note également l'aspect des sols obtenus.

Tableau I

Mesures des viscosités en mPa.s (viscosimètre BROOKFIELD, modèle RV — vitesse de 10 tours/minute — plongeurs n° 2 ou 3) Aspect des solutions

| REFERENCES | COMPOSITION 1 | | | | COMPOSITION 2 | | | |
|---|---|---|---|---|---|---|---|---|
| Concentration en Gomme Xanthane | 0,2 % | 0,3 % | 0,5 % | 1 % | 0,2 % | 0,3 % | 0,5 % | 1 % |
| Durée de l'agitation | | | | | | | | |
| 5 minutes | 170 | 685 | 1840 | 5690 | 15 | 95 | 1165 | 7260 |
| 10 minutes | 295 | 770 | 1905 | 5740 | 205 | 845 | 2240 | 7100 |
| 30 minutes | 310 | 775 | 1930 | 5950 | 360 | 820 | 2070 | 7180 |
| 45 minutes | 320 | 775 | 1950 | 5960 | 380 | 830 | 2020 | 6720 |
| Après repos de 24 heures | 325 | 750 | 1970 | 6000 | 340 | 800 | 2090 | 6600 |
| Observations après 5 minutes | bonne dispersion - présence de quelques petits grumeaux | | | | très bonne dispersion-suspension de fines particules blanches | | | |
| Observations après 10 minutes | encore quelques grumeaux très petits | | | | formation d'une légère mousse | | | |
| Observations après 30 minutes | sol homogène-pas de silice visible en suspension | | | | formation d'une légère mousse | | | |

Tableau II

Mesure des viscosités en mPa.s (viscosimètre BROOKFIELD, modèle RV — 10 tours/minute — plongeurs n° 2 ou 3) Aspect des solutions

| REFERENCE | GOMME XANTHANE | | | |
|---|---|---|---|---|
| Concentration en Gomme Xanthane | 0,2 % | 0,3 % | 0,5 % | 1 % |
| Durée de l'agitation | | | | |
| 5 minutes | non mesurable | non mesurable | non mesurable | non mesurable |
| 10 minutes | 145 | 400 | 1300 | 3310 |
| 30 minutes | 300 | 650 | 1890 | 5400 |
| 45 minutes | 300 | 680 | 1870 | 5500 |
| Après repos de 24 heures | 290 | 670 | 1825 | 5460 |
| Observations après: | | | | |
| 5 minutes | mélange hétérogène d'eau et de gros flocs ou grumeaux | | | |
| 10 minutes | début de l'opalescence-gros flocs | | | |
| 30 minutes | encore quelques grumeaux-milieu homogène | | | |

L'analyse comparative des tableaux I et II appelle les commentaires suivants :

— avec la composition 1, quelle que soit la concentration mais à un degré moindre pour 0,2 %, la viscosité maximale est pratiquement atteinte en 5 minutes alors que pour la Gomme Xanthane, il faut attendre 30 minutes.

La dispersion du produit est bonne et seuls quelques rares grumeaux apparaissent lorsque la poudre est additionnée rapidement mais disparaissent assez vite ;

— avec la composition 2, il faut environ 10 minutes pour obtenir un gonflement total ce qui est toujours favorable par rapport à la Gomme Xanthane.

La dispersion est excellente mais une suspension de fines particules blanches est observée en raison d'une teneur en silice plus importante dans cette formule. Par conséquent, lors du choix de l'utilisation d'une telle composition, il y a lieu de veiller à ce que la suspension ne soit pas gênante dans l'application envisagée.

Dans les mêmes conditions le sol de Gomme Xanthane est, après 5 minutes, un mélange hétérogène plein de grumeaux et pratiquement sans viscosité ; il faut attendre 30 minutes pour avoir un milieu presque homogène et qui a atteint sa viscosité finale.

La comparaison des sols de ces deux compositions à celui de la Gomme Xanthane après 24 heures de repos, c'est-à-dire à l'équilibre, montre que les deux compositions donnent, à concentration égale en Gomme Xanthane des viscosités légèrement supérieures :

— composition 1 : + 8 à 12 %
— composition 2 : + 15 à 20 %

Jusqu'à 10 %, on peut considérer que l'on est dans les limites de précision et de reproductibilité des mesures.

Au-delà, on peut penser que la charge qui est importante surtout dans la composition 2 contribue à une légère augmentation de la viscosité.

b — Comparaison des comportements rhéologiques

Le tracé de rhéogrammes met en évidence le comportement rhéologique des sols obtenus avec les compositions 1 et 2 et permet de vérifier, que, ainsi formulée, le comportement rhéologique de la Gomme Xanthane n'est pas modifié.

Des rhéogrammes sont tracés à l'aide d'un RHEOMAT 30 après 24 heures.

Ces tracés permettent de calculer la contrainte critique au seuil d'écoulement et les viscosités à différents gradients de vitesse.

Les tableaux III et IV consignent l'ensemble des résultats.

Tableau III

Mesures de la contrainte critique au seuil d'écoulement en Pa et des viscosités en mPa.s (viscosimètre RHEOMAT 30) à 2 gradients de vitesse

| REFERENCES | COMPOSITION 1 | | | | COMPOSITION 2 | | | |
|---|---|---|---|---|---|---|---|---|
| Concentration en Gomme Xanthane | 0,2 % | 0,3 % | 0,5 % | 1 % | 0,2 % | 0,3 % | 0,5 % | 1 % |
| Contrainte au seuil en Pa | 0,25 | 1,2 | 3,3 | 12,4 | 0,3 | 1,0 | 3,8 | 13,6 |
| Viscosité en mPa.s à 2,78 $s^{-1}$ | 428 | 950 | 2315 | 7030 | 428 | 860 | 2570 | 7070 |
| Viscosité en mPa.s à 278 $s^{-1}$ | 15 | 25 | 45 | 115 | 15 | 25 | 48 | 120 |

Tableau IV

Mesures de la contrainte critique au seuil d'écoulement en Pa et des viscosités en mPa.s (viscosimètre RHEOMAT 30) à 2 gradients de vitesse

| REFERENCE | GOMME XANTHANE | | | |
|---|---|---|---|---|
| Concentration en Gomme Xanthane | 0,2 % | 0,3 % | 0,5 % | 1 % |
| Contrainte au seuil en Pa | 0,2 | 0,7 | 3,2 | 10,7 |
| Viscosité en mPa.s à 2,78 $s^{-1}$ | 364 | 730 | 2315 | 6260 |
| Viscosité en mPa.s à 278 $s^{-1}$ | 15 | 23 | 45 | 103 |

La comparaison des rhéogrammes des deux compositions et de la Gomme Xanthane (cf. tableaux III et IV) permet de dire que :

— les compositions ont un seuil d'écoulement ($\sigma_c$) de même importance que la Gomme Xanthane donc elles auront un bon pouvoir de suspension,

— à faible cisaillement 2,78 $s^{-1}$ et à concentration égale, les compositions donnent légèrement plus de viscosité,

— à gradient de vitesse élevé 278 $s^{-1}$ et à concentration égale, les compositions donnent toujours des solutions très légèrement plus visqueuses,

— la présence de charge dans les compositions 1 et 2 n'apporte pas de thixotropie aux solutions.

En conclusion, l'ensemble des résultats montre que la Gomme Xanthane mise sous la forme des compositions de l'invention conserve ses propriétés rhéologiques et que sa mise en solution est nettement améliorée.

Exemples 3 à 6

Dans les exemples suivants, on met en œuvre dans les compositions de l'invention, une proportion plus forte de Gomme Xanthane.

1) Préparation des compositions à base de Gomme Xanthane

On réalise des compositions contenant de la Gomme Xanthane, une silice précipitée et du diisopropylnaphatalène sulfonate de sodium, de l'eau dans les proportions suivantes :

| | COMPOSITION 3 | COMPOSITION 4 |
|---|---|---|
| Gomme Xanthane (Rhodopol 23) | 40 % | 50 % |
| Silice précipitée (Tixosil 38A) | 18,35 % | 15 % |
| Diisopropylnaphtalènesulfonate de sodium (Supragil WP) | 5 % | 5 % |
| Eau | 36,65 % | 30 % |

| | COMPOSITION 5 | COMPOSITION 6 |
|---|---|---|
| Gomme Xanthane (Rhodopol 23) | 60 % | 70 % |
| Silice précipitée (Tixosil 38A) | 11,65 % | 8,35 % |
| Diisopropylnaphtalènesulfonate de sodium (Supragil WP) | 5 % | 5 % |
| Eau | 23,35 % | 16,65 % |

La teneur en Gomme Xanthane varie de 40 à 70 %, le rapport silice/eau constant, est de 0,5 et la teneur en diisopropylnaphtalènesulfonate de sodium fixée à 5 %.

Les caractéristiques des produits ont été donnés dans les exemples 1 et 2.

2) Préparation des sols

On prépare pour chaque expérience, 400 g de sol à teneur constante en Gomme Xanthane de 0,5 %.

3) Mesure des viscosités

La viscosité des sols obtenus avec les compositions 3, 4, 5 et 6 sont mesurées à 23 °C après 5, 10, 15, 20, 30 et 60 minutes avec un viscosimètre BROOKFIELD, modèle R.V. à la vitesse de 10 tours/minute et avec un plongeur n° 2.

Les valeurs obtenues sont données dans le tableau V.

A concentration égale en Gomme Xanthane, la mise en solution et l'augmentation de viscosité sont respectivement :

— la plus facile et la plus rapide pour la composition 1 (cf. exemple 1)

— la plus difficile et la plus lente pour la Gomme Xanthane seule,

Les quatres compositions étudiées ont un comportement intermédiaire la meilleure et la plus proche de la composition 1 est la composition 3, puis 4, 5 et enfin 6 qui se rapproche de la Gomme Xanthane seule mais dans tous les cas, ce type de composition apporte une amélioration.

Tableau V

Mesures des viscosités en mPa.s (viscosimètre BROOKFIELD, modèle RV — 10 tours/minute — plongeur n° 2) sur des sols à 0,5 %

| REFERENCES | COMPOSITION 3 | COMPOSITION 4 | COMPOSITON 5 | COMPOSITION 6 | GOMME XANTHANE |
|---|---|---|---|---|---|
| Durée d'agitation | | | | | |
| 5 minutes | 1740 | 1424 | 1164 | 780 | non mesurable |
| 10 minutes | 1960 | 1668 | 1540 | 1130 | 195 |
| 15 minutes | 2000 | 1848 | 1780 | 1380 | 565 |
| 20 minutes | 1960 | 1910 | 1924 | 1640 | 1050 |
| 30 minutes | 1970 | 1930 | 1920 | 1730 | 1325 |
| 60 minutes | 2010 | 1950 | 1940 | 1790 | 1460 |

Exemples 7 à 14

Les exemples suivants mettent en évidence l'influence du rapport Gomme Xanthane/eau intervenant quelle que soit la quantité de silice présente.

1) Préparation des compositions à base de Gomme Xanthane

On a préparé huit nouvelles compositions selon le mode opératoire général décrit précédemment.

| | COMP.7 | COMP.8 | COMP.9 | COMP.10 | COMP.11 | COMP.12 | COMP.13 | COMP.14 |
|---|---|---|---|---|---|---|---|---|
| Gomme Xanthane (Rhodopol 23) | 50 | 60 | 50 | 50 | 40 | 50 | 60 | 60 |
| Silice précipitée (Tixosil 38A) | 11,25 | 8,75 | 15 | 30 | 39,45 | 25,55 | 11,65 | 7,75 |
| Diisopropylnaphtalène-sulfonate de sodium (Supragil WP) | 5 | 5 | 5 | 5 | 5 | 5 | 5 | 5 |
| Eau | 33,75 | 26,25 | 15 | 15 | 15,55 | 19,45 | 23,35 | 27,25 |

2) Préparation de sols

On confectionne des sols contenant les compositions 7 à 14 en quantités telles que la concentration de la Gomme Xanthane soit constante et égale à 0,5 %.

3) Mesure des viscosités

La viscosité des sols obtenus avec les compositions 7 à 14 est mesurée après 5, 10, 15, 20, 30 et 60 minutes au viscosimètre BROOKFIELD modèle RV à la vitesse de 10 tours/minute et avec le plongeur n° 2.

Les résultats obtenus sont consignés dans le tableau VI : on récapitulera ceux des compositions 3 à 6.

Tableau VI

Mesures des viscosités en mPa.s (viscosimètre BROOKFIELD, modèle RV — 10 tours/minute — plongeur n° 2) sur des sols à 0,5 %

| REFERENCES | COMP. 3 | COMP. 4 | COMP. 5 | COMP. 6 | COMP. 7 | COMP. 8 | COMP. 9 |
|---|---|---|---|---|---|---|---|
| % de Gomme Xanthane dans la composition | 40 | 50 | 60 | 70 | 50 | 60 | 50 |
| Gomme Xanthane/eau | 1,1 | 1,7 | 2,6 | 4,2 | 1,5 | 2,3 | 3,3 |
| Silice/eau | 0,5 | 0,5 | 0,5 | 0,5 | 0,33 | 0,33 | 1 |
| Durée d'agitation | | | | | | | |
| 5 minutes | 1740 | 1424 | 1164 | 780 | 1600 | 1424 | 952 |
| 10 minutes | 1960 | 1668 | 1540 | 1130 | 1904 | 1720 | 1420 |
| 15 minutes | 2000 | 1848 | 1780 | 1380 | 1920 | 1848 | 1712 |
| 20 minutes | 1960 | 1910 | 1924 | 1640 | 1980 | 1870 | 1820 |
| 30 minutes | 1970 | 1930 | 1920 | 1730 | 1980 | 1870 | 1860 |
| 60 minutes | 2010 | 1950 | 1940 | 1790 | 2000 | 1904 | 1884 |

Tableau VI (Suite)

Mesures des viscosités en mPa · s (viscosimètre BROOKFIELD, modèle RV — 10 tours/minute — plongeur n° 2) sur des sols à 0,5 %

| REFERENCES | COMP.10 | COMP.11 | COMP.12 | COMP.13 | COMP.14 | Gomme Xanthane |
|---|---|---|---|---|---|---|
| % de Gomme Xanthane dans la composition | 50 | 40 | 50 | 60 | 60 | 100 |
| Gomme Xanthane/eau | 3,3 | 2,6 | 2,6 | 2,6 | 2,2 | – |
| Silice/eau | 2 | 2,5 | 1,3 | 0,5 | 0,28 | – |
| Durée d'agitation | | | | | | |
| 5 minutes | 724 | 1020 | 1020 | 1232 | 1408 | non mesurable |
| 10 minutes | 1200 | 1428 | 1410 | 1668 | 1792 | 195 |
| 15 minutes | 1540 | 1736 | 1750 | 1870 | 1860 | 565 |
| 20 minutes | 1844 | 1930 | 1930 | 1960 | 1940 | 1050 |
| 30 minutes | 1896 | 1980 | 1984 | 1960 | 1924 | 1325 |
| 60 minutes | 1988 | 2024 | 2024 | 2000 | 1960 | 1460 |

Après 5 minutes d'agitation, on confirme que ce sont les compositions pour lesquelles la quantité d'eau est la plus importante pour une même quantité de Gomme Xanthane qui se solubilisent le plus facilement et donnent le plus de viscosité.

On note que lorsque le rapport Gomme Xanthane/eau varie de 3,3 à 2,3, l'augmentation de la viscosité est très importante après 5 minutes d'agitation de 700 mPa.s à 1 400 mPa.s soit un gain de 100 %.

Au-dessous d'un rapport de 2,5, le gain est nettement plus faible et devient négligeable après 20 minutes.

Pour avoir une composition aussi riche que possible en Gomme Xanthane et le maximum d'eau, il faudrait introduire le minimum de silice dont beaucoup d'eau et peu de silice. En fait, le maximum d'eau qu'il a été possible de faire adsorber à la silice est trois fois son poids d'eau si l'on veut garder au produit final, un aspect de poudre sèche, coulable et sans agglomérat.

Avec un rapport silice/eau de 0,28, la poudre est trop humide et forme des agglomérats et il n'y a pas de gain sur la mise en dispersion et la vitesse de dissolution.

4) Etude de stabilité

On met en évidence la stabilité des compositions « poudre » et des sols au cours d'un stockage prolongé.

a — Stabilité des compositions « poudre »

On conserve les compositions à température ambiante de 23 °C dans des flacons en polyéthylène.

On teste les compositions 4 et 8 définies précédemment.

Après stockage de 24 heures, 20 jours (composition 8), 30 jours (composition 4) et 60 jours, on réalise des sols contenant 0,5 % des compositions 4 et 8.

On mesure la viscosité obtenue, 30 minutes après la préparation des sols, avec un viscosimètre BROOKFIELD, modèle RV à la vitesse de 10 tours/minute et avec un plongeur n° 2.

On obtient les résultats suivants : les durées de stockage sont exprimées en heures (h) ou en jours (j).

| REFERENCES | COMPOSITION 4 | | | COMPOSITION 8 | | |
|---|---|---|---|---|---|---|
| Durée de stockage | 24 h | 30 j | 60 j | 24 h | 20 j | 60 j |
| Viscosité en mPa.s | 2000 | 1930 | 1910 | 1870 | 1890 | 1910 |

On remarque que les compositions de l'invention ont un aspect inchangé et gardent leur efficacité même après deux mois de stockage.

b — Stabilité des sols

Avec les compositions 7 et 8, on prépare des sols de façon habituelle et on les conserve dans des récipients fermés, en salle conditionnée à 23 °C.

On mesure la viscosité après stockage de 1 heure, 20 jours et 56 jours dans les mêmes conditions que décrites sous a.

Les résultats obtenus sont les suivants : les durées de stockage sont exprimées en heures (h) ou en jours (j).

| REFERENCES | COMPOSITION 7 | | | COMPOSITION 8 | | |
|---|---|---|---|---|---|---|
| Durée de stockage | 1 h | 20 j | 56 j | 1 h | 20 j | 56 j |
| Viscosité en mPa.s | 2000 | 1960 | 1920 | 1870 | 1920 | 1860 |

La stabilité des sols est très bonne, d'autant plus qu'il n'a pas été ajouté de conservateur ; aucune odeur, ni moisissure n'a été remarquée après 56 jours de stockage.

Exemples 15 à 18

Les exemples suivants mettent en évidence l'influence de la proportion du tensio-actif dans les compositions de l'invention.

1) Préparation des compositions à base de Gomme Xanthane

On prépare des compositions contenant de la Gomme Xanthane, une silice précipitée, de l'eau et le tensio-actif qui est le diisopropylnaphtalènesulfonate de sodium en proportions croissantes.

| | COMPOSITION 15 | COMPOSITION 16 |
|---|---|---|
| Gomme Xanthane (Rhodopol 23) | 62,5 | 64 |
| Silice précipitée (Tixosil 38A) | 9,38 | 8,75 |
| Diisopropylnaphtalènesulfonate de sodium (Supragil WP) | 0 | 1 |
| Eau | 28,12 | 26,25 |

| | COMPOSITION 17 | COMPOSITION 18 |
|---|---|---|
| Gomme Xanthane (Rhodopol 23) | 62 | 60 |
| Silice précipitée (Tixosil 38A) | 8,75 | 8,75 |
| Diisopropylnaphtalènesulfonate de sodium (Supragil WP) | 3 | 5 |
| Eau | 26,25 | 26,25 |

La teneur en diisopropylnaphtalènesulfonate de sodium varie de 0 à 5 %.

La silice et l'eau sont dans un rapport constant de 0,33.

Les teneurs de Gomme Xanthane et du mélange silice et eau, ont été déterminées de telle sorte que le rapport Gomme Xanthane/eau soit égal ou aussi proche que possible de 2,2.

On réalise la préparation des compositions selon le mode opératoire décrit avant les exemples.

2) Préparation des sols

On confectionne ensuite des sols avec les compositions 15 à 18 en quantités telles que la concentration en Gomme Xanthane soit constante et égale à 0,5 %.

3) Mesure des viscosités

La viscosité des sols obtenus avec les compositions 15 à 18 est mesurée après 5, 10, 15, 20 et 30 minutes avec un viscosimètre BROOKFIELD, modèle R.V. à la vitesse de 10 tours/minute et avec un plongeur n° 2.

On rassemble les résultats obtenus dans le tableau VII.

(Voir Tableau VII page 18)

Tableau VII

Mesures des viscosités en mPa.s (viscosimètre BROOKFIELD, modèle RV — 10 tours/minute — plongeur n° 2) sur des sols à 0,5 %

| REFERENCES | COMPOSITION 15 | COMPOSITION 16 | COMPOSITON 17 | COMPOSITION 18 | GOMME XANTHANE |
|---|---|---|---|---|---|
| % diisopropylnaphtalène sulfonate de sodium dans la composition | 0 | 1 | 3 | 5 | 0 |
| Durée d'agitation | | | | | |
| 5 minutes | 1040 | 1200 | 1580 | 1600 | non mesurable |
| 10 minutes | 1420 | 1540 | 1980 | 2000 | 195 |
| 15 minutes | 1680 | 1820 | 1990 | 2000 | 565 |
| 20 minutes | 1900 | 1900 | 1990 | 2000 | 1050 |
| 30 minutes | 1920 | 1920 | 1990 | 2000 | 1325 |

On note qu'il est préférable de mettre en œuvre le diisopropylnaphtalènesulfonate de sodium car la viscosité est améliorée. La présence d'un tensio-actif est donc souhaitable. Il n'y a aucun intérêt à mettre en œuvre un excès de diisopropylnaphtalènesulfonate de sodium car une teneur de 3 % semble suffisante pour obtenir rapidement la viscosité maximale.

Exemples 19 à 21

Les exemples suivants illustrent la mise en œuvre d'autres tensio-actifs.

1) Préparation des compositions à base de Gomme Xanthane

Les compositions des exemples précédents ont été réalisées avec comme tensio-actif, un diisopropylnaphtalènesulfonate de sodium (Supragil WP) qui est un produit pulvérulent ayant un faible pouvoir mouillant de 4,1 g/l à 20 °C déterminé selon la méthode normalisée NFT 73 406.

Ci-après, on met en œuvre des tensio-actifs liquides :

— un Alfol 10-12, 7 O.E., 5 O.P. : c'est-à-dire un mélange d'alcools primaires linéaires ayant de 10 et 12 atomes de carbone et condensés avec 7 moles d'oxyde d'éthylène et 5 moles d'oxyde propylène (Cemulsol FM 33) = tensio-actif non ionique ayant un pouvoir mouillant de 0,70 g/l

— un dioctylsulfosuccinate de sodium (Celanol DOS 65) en solution dans l'isopropanol : tensio-actif anionique liquide ayant un fort pouvoir mouillant de 0,30 g/l.

On réalise la préparation des compositions de l'invention en tenant compte du pouvoir mouillant du tensio-actif pour le choix de sa concentration.

| | COMP. 19 | COMP. 20 | COMP. 21 |
|---|---|---|---|
| Gomme Xanthane (Rhodopol 23) | 60 | 56,7 | 62 |
| Silice précipitée (Tixosil 38A) | 10,75 | 12,05 | 8,75 |
| Alfol 10-12, 7 O.E., 5.O.P (Cemulsol FM 33) | 3 | 5 | |
| Dioctylsulfosuccinate de sodium (Celanol DOS 65) | | | 2 |
| Isopropanol | | | 1 |
| Eau | 26,25 | 26,25 | 26,25 |

On obtient les compositions selon le mode opératoire général sauf que le tensio-actif liquide est adsorbé sur la silice dans les mêmes conditions que l'eau, avant l'addition de la Gomme Xanthane.

2) Préparation des sols

On confectionne des sols avec les compositions 19 à 21 en quantités telles que la concentration en Gomme Xanthane soit constante et égale à 0,5 %.

3) Mesure des viscosités

La viscosité des sols obtenus avec les compositions est mesurée après 5, 10, 15, 20, 30 et 60 minutes avec un viscosimètre BROOKFIELD modèle RV à la vitesse de 10 tours/minute et avec le plongeur n° 2.

On rassemble les résultats obtenus dans le tableau VIII : à titre comparatif, on a repris ceux obtenus avec le diisopropylnaphtalènesulfonate de sodium dans les exemples 17 et 18.

Les compositions testées avec des tensio-actifs à bon pouvoir mouillant donnent des résultats meilleurs qu'en leur absence mais ils restent nettement inférieurs à ceux obtenus avec le diisopropylnaphtalènesulfonate de sodium.

(Voir Tableau VIII page 20)

Tableau VIII

Mesures des viscosités en mPa.s (viscosimètre BROOKFIELD, modèle RV — 10 tours/minute — plongeur n° 2) sur des sols à 0,5 %

| REFERENCES | COMP.17 | COMP.18 | COMP.19 | COMP.20 | COMP.21 | Gomme Xanthane |
|---|---|---|---|---|---|---|
| % de tensio-actif dans la composition | 3 | 5 | 3 | 5 | 2 | 0 |
| Durée d'agitation | | | | | | |
| 5 minutes | 1580 | 1620 | 1240 | 1360 | 1120 | non mesurable |
| 10 minutes | 2000 | 1980 | 1600 | 1740 | 1460 | 195 |
| 15 minutes | 1980 | 1980 | 1840 | 1880 | 1640 | 565 |
| 20 minutes | 1980 | 2000 | 1980 | 1940 | 1860 | 1050 |
| 30 minutes | 2000 | 2000 | 1980 | 1960 | 1900 | 1325 |
| 60 minutes | 2000 | 2000 | 2000 | 1980 | 1980 | 1460 |

Exemples 22 à 30

Les exemples suivants illustrent la mise en œuvre d'autres matériaux apportant de l'eau.

1) Préparation des compositions à base de Gomme Xanthane

Toutes les compositions réalisées avec les différents matériaux (sauf avec les gels de silice hydratés) renferment :

— 60 % de Gomme Xanthane (Rhodopol 23),
— 17,5 % d'un matériau apportant l'eau,
— 5 % de diisopropylnaphtalènesulfonate de sodium (Supragil WP),
— 17,5 % d'eau.

Lorsque le matériau apportant l'eau est un gel de silice hydraté, la composition a la formulation suivante :

— 60 % de Gomme Xanthane (Rhodopol 23)
— 35 % de gel de silice hydraté
— 5 % de diisopropylnaphtalènesulfonate de sodium (Supragil WP)

On donne, ci-après au moins un exemple de chaque catégorie de matériaux apportant l'eau :

— gel de silice hydraté (A) contenant 68 % en poids d'eau par rapport à la silice sèche et ayant une surface BET de 600 $m^2/g$,
— gel de silice hydraté (B) contenant 86 % en poids d'eau par rapport à la silice sèche et ayant une surface BET de 600 $m^2/g$,
— gel de silice déshydraté ayant une surface BET de 380 $m^2/g$ et un volume poreux de 1 $cm^3/g$ (Sphérosil),
— hydrate d'alumine (C) ayant une surface BET d'environ 300 à 350 $m^2/g$, un volume poreux de 0,7 à 0,8 $cm^3/g$ et un diamètre moyen de particules de 10 µm (Alumine SCP 350),
— hydrate d'alumine (D) ayant une surface BET de 200 $m^2/g$, un volume poreux de 0,6 $cm^3/g$ et un diamètre moyen de particules de 15 µm (Alumine CONDEA),
— hydrargillite SH 5 : hydrate d'alumine naturelle ayant une surface BET de 5 $m^2/g$,
— attapulgite : argile en provenance du Sénégal,
— bentonite ayant un diamètre moyen de particules de 1 à 5 µm,
— zéolithe 4 A : zéolithe synthétique de type sodique, ayant une surface BET de 3 à 4 $m^2/g$, un volume poreux de 0,2 $cm^3/g$ et un diamètre moyen de particules de 4 µm (zéolithe 4A SLD n° 9).

On prépare les compositions de l'invention selon le schéma général donné précédemment.

2) Préparation des sols

On confectionne des sols avec les compositions 22 à 30 en quantités telles que la concentration en Gomme Xanthane soit constante et égale à 0,5 %.

3) Mesure des viscosités

La viscosité des sols obtenus avec les compositions 22 à 30 est mesurée après 5, 10, 15, 20 et 30 minutes avec un viscosimètre BROOKFIELD modèle RV à la vitesse de 10 tours/minute et avec le plongeur n° 2.

Les résultats sont consignés dans le tableau IX.

Sans être aussi bons que la silice fine précipitée (Tixosil 38), les autres matériaux testés apportant l'eau améliorent à des degrés différents le développement de la viscosité apportée par la Gomme Xanthane.

(Voir Tableau IX page 22 et suivantes)

Tableau IX

Mesures des viscosités en mPa.s (viscosimètre BROOKFIELD, modèle RV — 10 tours/minute — plongeur n° 2) sur des sols à 0,5 %

| REFERENCES | COMPOSITION 22 | COMPOSITION 23 | COMPOSITION 24 | COMPOSITION 25 | COMPOSITION 26 |
|---|---|---|---|---|---|
| Nature du matériau apportant l'eau | Gel de silice hydraté (A) | Gel de silice hydraté (B) | Gel de silice déshydraté (SPHEROSIL) | Hydrate d'alumine (C) | Hydrate d'alumine (D) |
| Durée d'agitation | | | | | |
| 5 minutes | 540 | 1160 | 720 | 160 | 220 |
| 10 minutes | 1180 | 1600 | 1300 | 540 | 720 |
| 15 minutes | 1800 | 1800 | 1640 | 1020 | 1220 |
| 20 minutes | 1920 | 1900 | 1850 | 1480 | 1660 |
| 30 minutes | 1900 | 1960 | 1920 | 1620 | 1820 |

Tableau IX (Suite)

Mesures des viscosités en mPa.s (viscosimètre BROOKFIELD, modèle RV — 10 tours/minute — plongeur n° 2) sur des sols à 0,5 %

| REFERENCES | COMPOSITION 27 | COMPOSITION 28 | COMPOSITION 29 | COMPOSITION 30 | Gomme Xanthane |
|---|---|---|---|---|---|
| Nature du matériau apportant l'eau | Hydrargillite | Attapulgite | Bentonite | Zéolithe 4A | néant |
| Durée d'agitation | | | | | |
| 5 minutes | 140 | 860 | 350 | 390 | non mesurable |
| 10 minutes | 450 | 1360 | 940 | 790 | 195 |
| 15 minutes | 780 | 1640 | 1210 | 1120 | 565 |
| 20 minutes | 1120 | 1810 | 1440 | 1520 | 1050 |
| 30 minutes | 1720 | 1900 | 1760 | 1850 | 1325 |

Exemples 31 à 39

Les exemples qui suivent, illustrent la mise en œuvre de sels hydratés à titre de matériaux apportant de l'eau.

1) Préparation des compositions à base de Gomme Xanthane

Toutes les compositions réalisées ont la formulation suivante :
60 % de Gomme Xanthane (Rhodopol 23)
35 % d'un sel hydraté
5 % de diisopropylnaphtalènesulfonate de sodium (Supragil WP)
On utilise les sels suivants :
— sulfate de sodium décahydraté : $Na_2SO_4$, $10H_2O$
— carbonate de sodium décahydraté : $Na_2CO_3$, $10H_2O$
— phosphate de sodium dodécahydraté : $Na_3PO_4$, $12H_2O$
— acétate de sodium trihydraté : $NaC_2H_3O_2$, $3H_2O$
— citrate de sodium pentahydraté : $Na_3C_6H_5O_7$, $5{,}5H_2O$
— chlorure de calcium hexahydraté : $CaCl_2$, $6H_2O$
— lactate de calcium pentahydraté : $Ca(C_3H_5O_3)_2$, $5H_2O$
— chlorure de magnésium hexahydraté : $MgCl_2$, $6H_2O$
— nitrate de magnésium hexahydraté : $Mg(NO_3)_2$, $6H_2O$
On prépare les compositions de l'invention selon le mode opératoire classique donné précédemment à la différence près que l'étape d'imprégnation à l'eau du matériau n'a pas lieu.

2) Préparation des sols

On confectionne des sols avec les compositions 31 à 39 en quantités telles que la concentration en Gomme Xanthane soit constante et égale à 0,5 %.

3) Mesure des viscosités

La viscosité des sols obtenus avec les compositions 31 à 39 est mesurée après 5, 10, 15, 20, et 30 minutes avec un viscosimètre BROOKFIELD modèle RV à la vitesse de 10 tours/minute et avec le plongeur n° 2.
On consigne les résultats dans le tableau X : les rapports donnés Gomme Xanthane/eau et sel/eau sont des rapports pondéraux.

(Voir Tableau X page 25 et suivantes)

Tableau X

Mesures des viscosités en mPa.s (viscosimètre BROOKFIELD, modèle RV — 10 tours/minute — plongeur n° 2) sur des sols à 0,5 %

| REFERENCES | COMPOSITION 31 | COMPOSITION 32 | COMPOSITION 33 | COMPOSITION 34 | COMPOSITION 35 |
|---|---|---|---|---|---|
| Nature du matériau apportant l'eau | $Na_2SO_4$, $10H_2O$ | $Na_2CO_3$, $10H_2O$ | $Na_3PO_4$, $12H_2O$ | $NaC_2H_3O_2$, $3H_2O$ | $Na_3C_6H_5O_7$, $5,5H_2O$ |
| Gomme Xanthane/eau | 3,1 | 2,8 | 3,0 | 4,3 | 6,25 |
| Sel/eau | 0,8 | 0,6 | 0,75 | 1,5 | 2,6 |
| Durée d'agitation | | | | | |
| 5 minutes | 820 | 780 | 640 | 740 | 740 |
| 10 minutes | 1240 | 1100 | 1020 | 1540 | 1400 |
| 15 minutes | 1440 | 1220 | 1200 | 1660 | 1560 |
| 20 minutes | 1550 | 1300 | 1320 | 1700 | 1680 |
| 30 minutes | 1700 | 1480 | 1500 | 1800 | 1760 |

Tableau X (Suite)

Mesures des viscosités en mPa.s (viscosimètre BROOKFIELD, modèle RV — 10 tours/minute — plongeur n° 2) sur des sols à 0,5 %

| REFERENCES | COMPOSITION 36 | COMPOSITION 37 | COMPOSITION 38 | COMPOSITION 39 | GOMME XANTHANE |
|---|---|---|---|---|---|
| Nature du matériau apportant l'eau | $CaCl_2, 6H_2O$ | $Ca(C_3H_5O_3)_2, 5H_2O$ | $MgCl_2, 6H_2O$ | $Mg(NO_3)_2, 6H_2O$ | - |
| Gomme Xanthane/eau | 3,6 | 5,9 | 3,2 | 4,2 | - |
| Sel/eau | 1,0 | 2,4 | 0,9 | 1,4 | - |
| Durée d'agitation | | | | | |
| 5 minutes | 200 | 680 | 260 | 500 | 0 |
| 10 minutes | 960 | 1260 | 820 | 1160 | 240 |
| 15 minutes | 1370 | 1540 | 1160 | 1540 | 670 |
| 20 minutes | 1600 | 1660 | 1380 | 1700 | 1000 |
| 30 minutes | 1740 | 1800 | 1460 | 1840 | 1350 |

Tous les sels hydratés testés apportent une nette amélioration sur la vitesse de dissolution et de gonflement par rapport à la Gomme Xanthane seule.

Il ressort de l'ensemble des exemples :

— que l'association de la Gomme Xanthane à un matériau apportant de l'eau améliore la vitesse de dissolution de la Gomme Xanthane et la vitesse de développement de la viscosité maximale,

— que l'adjonction d'un tensio-actif permet d'améliorer davantage la viscosité,

— que la composition préférentielle est la suivante :

60 % de Gomme Xanthane
8,75 % de silice fine précipitée
5 % de diisopropylnaphtalènesulfonate de sodium
26,25 % d'eau.

Le graphique I rend compte la variation de la viscosité des sols mesurée à 10 tours/minute en fonction du temps d'agitation, sols obtenus :

— avec la composition préférée de l'invention (courbe 1)

— avec la même composition mais sans le tensio-actif (courbe 2)

— avec la Gomme Xanthane seule (courbe 3).

Dans les 3 cas, la concentration en Gomme Xanthane est constante et égale à 0,5 %.

On confirme la supériorité des résultats obtenus avec les compositions de l'invention.

**Revendications**

1. Compositions à base de gomme hydrosoluble comprenant un additif facilitant sa dispersion caractérisées par le fait qu'elles sont obtenues par mélange à sec d'une biogomme et d'un matériau apportant de l'eau qui peut être soit de l'eau liée ou d'adsorption, soit de l'eau de cristallisation, la quantité d'eau apportée par le dit matériau étant telle que le rapport pondéral biogomme/eau est comprise entre 6,5 et 1 et le rapport pondéral matériau apportant l'eau (en sec)/eau est compris entre 0,3 et 2,6.

2. Compositions selon la revendication 1 caractérisées par le fait que la biogomme est obtenue par fermentation d'un hydrate de carbone sous l'action de bactéries du genre Xanthomonas, Arthrobacter ou de champignons du genre Sclerotium.

3. Compositions selon l'une des revendications 1 et 2 caractérisées par le fait que la biogomme est obtenue par fermentation d'un hydrate de carbone sous l'action de bactéries du genre Xanthomonas Campestris.

4. Compositions selon l'une des revendications 1 à 3 caractérisées par le fait que le matériau apportant l'eau est une silice fine précipitée, un gel de silice hydraté, un gel de silice déshydraté, un hydrate d'alumine sous forme naturelle ou synthétique, une argile, une zéolithe naturelle ou synthétique, un hydrate de sels minéraux ou organiques.

5. Compositions selon l'une des revendications 1 à 4, caractérisées par le fait que le matériau apportant l'eau est un hydrate des sels suivants mis en œuvre seuls, en mélange ou sous forme de combinaisons : les carbonates, les halogénures, les nitrates, les phosphates, les silicates, les sulfates ainsi que les acétates, les citrates, les lactates, les laurates, les tartrates des sels de sodium, potassium, calcium, magnésium.

6. Compositions selon l'une des revendications 1 à 5 caractérisées par le fait que le matériau apportant l'eau est une silice fine précipitée ayant une surface BET de 200 à 400 $m^2/g$ et un diamètre de particules variant de 20 à 80 nm : un gel de silice hydraté, un gel de silice déshydraté, un hydrate d'alumine, une hydrargillite, une bentonite, une attapulgite, une zéolithe 4A, un sulfate de sodium décahydraté, un carbonate de sodium décahydraté, un phosphate de sodium dodécahydraté, un acétate de sodium trihydraté, un citrate de sodium pentahydraté, un chlorure de calcium hexahydraté, un lactate de calcium pentahydraté, un chlorure de magnésium hexahydraté, un nitrate de magnésium hexahydraté.

7. Compositions selon l'une des revendications 1 à 6 caractérisées par le fait que le matériau apportant l'eau est une silice fine précipitée capable d'adsorber 2 ou 3 fois son poids d'eau.

8. Compositions selon l'une des revendications 1 à 7 caractérisées par le fait qu'elles comprennent en outre un tensio-actif anionique et/ou non ionique.

9. Compositions selon l'une des revendications 1 à 8 caractérisées par le fait que le tensio-actif est un tensio-actif anionique comme les savons de métaux alcalins, les sulfonates alcalins, les sulfates et produits sulfatés, les phosphates alcalins et/ou un tensio-actif non ionique comme les alcoylphénols polyoxyéthylénés, les alcools aliphatiques polyoxyéthylénés, les amides gras, les dérivés polyoxyéthylénés et polyoxypropylénés.

10. Compositions selon la revendication 9, caractérisées par le fait que le tensio-actif est un alcoylsulfosuccinate de sodium, un alcoylnaphtalènesulfonate de sodium, une oléfine sulfonée.

11. Compositions selon l'une des revendications 9 et 10, caractérisées par le fait que le tensio-actif est un diisopropylnaphtalènesulfonate de sodium.

12. Compositions selon l'une des revendications 1 à 11 caractérisées par le fait que la quantité d'eau apportée par le matériau apportant l'eau est telle que le rapport pondéral (biogomme/eau) varie de 2,5 à 1.

13. Compositions selon l'une des revendications 1 à 12 caractérisées par le fait que le rapport pondéral (matériau apportant de l'eau (en sec)/eau varie de 0,3 à 0,6.

14. Compositions selon l'une des revendications 1 à 13 caractérisées par le fait que la quantité de tensio-actif est telle que le rapport entre le poids de tensio-actif et le poids total de la composition varie entre 0 et 0,10 de préférence entre 0,03 et 0,07.

15. Compositions selon l'une des revendications 1 à 14 caractérisées par le fait qu'elles renferment :
— de 30 à 70 % en poids de biogomme
— de 7 à 40 % en poids de matériau apportant l'eau
— de 0 à 10 % en poids de tensio-actif anionique et/ou non ionique
— de 15 à 37 % en poids d'eau.

16. Compositions selon la revendication 15 caractérisées par le fait qu'elles renferment :
— de 50 à 60 % en poids de biogomme
— de 8 à 15 % en poids d'un matériau apportant l'eau
— de 3 à 7 % en poids d'un tensio-actif anionique et/ou non ionique
— de 24 à 36 % en poids d'eau.

17. Procédé de préparation des compositions décrites dans l'une des revendications 1 à 16 caractérisé par le fait qu'il consiste à mélanger à sec le matériau apportant l'eau sur lequel éventuellement on a adsorbé de l'eau, avec la biogomme et éventuellement à ajouter un tensio-actif anionique et/ou non ionique.

18. Procédé selon la revendication 17 caractérisé par le fait que l'on ajoute le tensio-actif solide au mélange constitué par le matériau apportant l'eau et la biogomme.

19. Procédé selon la revendication 17, caractérisé par le fait que l'on adsorbe le tensio-actif liquide sur le matériau apportant l'eau, simultanément ou successivement à l'eau, puis on effectue le mélange avec la biogomme.

20. Sols obtenus par la mise en solution aqueuse des compositions décrites dans l'une des revendications 1 à 16.

21. Sols selon la revendication 20 caractérisés par le fait que la concentration du sol en composition de l'invention exprimée en biogomme varie de 0,2 à 2 %.

**Claims**

1. Compositions based on water-soluble gum containing an additive which facilitates its dispersion, characterized in that they are obtained by the dry mixing of a biogum and a material providing water, which can be either bound or adsorbed water or water of crystallization, the amount of water provided by the said material being such that the weight ratio biogum/water is between 6.5 and 1 and the weight ratio material providing water (dry material)/water is between 0.3 and 2.6.

2. Compositions according to Claim 1, characterized in that the biogum is obtained by fermentation of a carbohydrate under the action of bacteria of the genus Xanthomonas or Arthrobacter or fungi of the genus Sclerotium.

3. Compositions according to one of Claims 1 and 2, characterized in that the biogum is obtained by fermentation of a carbohydrate under the action of bacteria of the genus Xanthomonas campestris.

4. Compositions according to one of Claims 1 to 3, characterized in that the material providing water is a precipitated fine silica, a hydrated silica gel, a dehydrated silica gel, a hydrate of alumina in natural or synthetic form, a clay, a natural or synthetic zeolite, or a hydrate of inorganic or organic salts.

5. Compositions according to one of Claims 1 to 4, characterized in that the material providing water is a hydrate of the following salts which are employed alone, mixed or in the form of combinations : sodium, potassium, calcium and magnesium carbonates, halides, nitrates, phosphates, silicates, sulphates and also acetates, citrates, lactates, laurates and tartrates.

6. Compositions according to one of Claims 1 to 5, characterized in that the material providing water is a precipitated fine silica having a BET surface area of 200 to 400 $m^2/g$ and a particle diameter varying from 20 to 80 nm ; a hydrated silica gel, a dehydrated silica gel, a hydrate of alumina, a hydrargillite, a bentonite, an attapulgite, a zeolite 4A, a sodium sulphate decahydrate, a sodium carbonate decahydrate, a sodium phosphate dodecahydrate, a sodium acetate trihydrate, a sodium citrate pentahydrate, a calcium chloride hexahydrate, a calcium lactate pentahydrate, a magnesium chloride hexahydrate or a magnesium nitrate hexahydrate.

7. Compositions according to one of Claims 1 to 6, characterized in that the material providing water is a precipitated fine silica capable of adsorbing 2 or 3 times its own weight of water.

8. Compositions according to one of Claims 1 to 7, characterized in that they contain, in addition, an anionic and/or nonionic surfactant.

9. Compositions according to one of Claims 1 to 8, characterized in that the surfactant is an anionic surfactant such as alkali metal soaps, alkali metal sulphonates, sulphates and sulphated products and alkali metal phosphates, and/or a nonionic surfactant such as polyoxyethylenated alkylphenols, polyoxyethylenated aliphatic alcohols, fatty amides and polyoxyethylenated and polyoxypropylenated derivatives.

10. Compositions according to Claim 9, characterized in that the surfactant is a sodium alkyl sulphosuccinate, a sodium alkylnaphthalenesulphonate or a sulphonated olefin.

11. Compositions according to one of Claims 9 and 10, characterized in that the surfactant is a sodium diisopropylnaphthalenesulphonate.

12. Compositions according to one of Claims 1 to 11, characterized in that the amount of water provided by the material providing water is such that the weight ratio (biogum/water) varies from 2.5 to 1.

13. Compositions according to one of Claims 1 to 12, characterized in that the weight ratio [material providing water (dry material)/water] varies from 0.3 to 0.6.

14. Compositions according to one of Claims 1 to 13, characterized in that the amount of surfactant is such that the ratio between the weight of surfactant and the total weight of the composition varies between 0 and 0.10, and preferably between 0.03 and 0.07.

15. Compositions according to one of Claims 1 to 14, characterized in that they contain :
— from 30 to 70 % by weight of biogum
— from 7 to 40 % by weight of material providing water
— from 0 to 10 % by weight of anionic and/or non-ionic surfactant
— from 15 to 37 % by weight of water.

16. Compositions according to Claim 15, characterized in that they contain :
— from 50 to 60 % by weight of biogum
— from 8 to 15 % by weight of a material providing water
— from 3 to 7 % by weight of an anionic and/or non-ionic surfactant
— from 24 to 36 % by weight of water.

17. Process for preparing the compositions described in one of Claims 1 to 16, characterized in that it consists in dry mixing the material providing water, on which material, where appropriate, water has been adsorbed, with the biogum and, where appropriate, in adding an anionic and/or nonionic surfactant.

18. Process according to Claim 17, characterized in that the solid surfactant is added to the mixture consisting of the material providing water and the biogum.

19. Process according to Claim 17, characterized in that the liquid surfactant is adsorbed on the material providing water, simultaneously with or in succession to the water, and mixing with the biogum is then performed.

20. Sols obtained by bringing into aqueous solution the compositions described in one of Claims 1 to 16.

21. Sols according to Claim 20, characterized in that the concentration of the composition of the invention in the sol, expressed as biogum, varies from 0.2 to 2 %.

**Patentansprüche**

1. Massen auf der Basis eines wasserlöslichen Gummis, enthaltend einen Zusatz, der dessen Dispersion erleichtert, dadurch gekennzeichnet, daß sie durch trocknes Vermischen eines Biogummis mit einem Material erhalten werden, das Wasser liefert, das entweder gebundenes oder adsorbiertes Wasser oder Kristallwasser ist, wobei die durch dieses Material zugeführte Menge Wasser so beschaffen ist, daß das Gewichtsverhältnis Biogummi/Wasser 6,5 bis 1 und das Gewichtsverhältnis wasserlieferndes Material (trocken)/Wasser 0,3 bis 2,6 beträgt.

2. Massen nach Anspruch 1, dadurch gekennzeichnet, daß der Biogummi durch Fermentation eines Kohlenhydrats unter der Einwirkung von Bakterien der Art Xanthomonas, Arthrobacter oder von Pilzen der Art Sclerotium erhalten wird.

3. Massen nach einem der Ansprüche 1 und 2, dadurch gekennzeichnet, daß der Biogummi durch Fermentation eines Kohlenhydrats unter der Einwirkung von Bakterien der Art Xanthomonas campestris erhalten wird.

4. Massen nach einem der Ansprüche 1 bis 3, dadurch gekennzeichnet, daß das wasserliefernde Material eine feine gefällte Kieselsäure, ein hydratisiertes Kieselsäuregel, ein dehydratisiertes Kieselsäuregel, ein natürliches oder synthetisches Aluminiumoxidhydrat, ein Ton, ein natürlicher oder synthetischer Zeolith oder ein Hydrat von anorganischen oder organischen Salzen ist.

5. Massen nach einem der Ansprüche 1 bis 4, dadurch gekennzeichnet, daß das wasserliefernde Material ein Hydrat der folgenden Salze, einzeln, im Gemisch miteinander oder in Form von Kombinationen ist : Carbonate, Halogenide, Nitrate, Phosphate, Silicate, Sulfate sowie Acetate, Citrate, Lactate, Laurate und Tartrate von Natrium, Kalium, Calcium und Magnesium.

6. Massen nach einem der Ansprüche 1 bis 5, dadurch gekennzeichnet, daß das wasserliefernde Material eine feine gefällte Kieselsäure mit einer BET-Oberfläche von 200 bis 400 $m^2/g$ und einem Teilchendurchmesser von 20 bis 80 nm ist : ein hydratisiertes Kieselsäuregel, ein dehydratisiertes Kieselsäuregel, ein Aluminiumoxidhydrat, ein Hydrargillit, ein Bentonit, ein Attapulgit, ein Zeolith 4A, ein Natriumsulfat-decahydrat, ein Natriumcarbonat-decahydrat, ein Natriumphosphat-dodecahydrat, ein Natriumacetat-trihydrat, ein Natriumcitrat-pentahydrat, ein Calciumchlorid-hexahydrat, ein Calciumlactat-pentahydrat, ein Magnesiumchlorid-hexahydrat, ein Magnesiumnitrat-hexahydrat.

7. Massen nach einem der Ansprüche 1 bis 6, dadurch gekennzeichnet, daß das wasserliefernde

Material eine feine gefällte Kieselsäure ist, die das 2- oder 3-fache ihres Gewichts an Wasser adsorbieren kann.

8. Massen nach einem der Ansprüche 1 bis 7, dadurch gekennzeichnet, daß sie zusätzlich ein anionisches und/oder nichtionisches Tensid enthalten.

9. Massen nach einem der Ansprüche 1 bis 8, dadurch gekennzeichnet, daß das Tensid ein anionisches Tensid ist, wie die Alkalimetallseifen, Alkalisulfonate, Sulfate und sulfatierten Produkte, Alkaliphosphate, und/oder ein nichtionisches Tensid, wie die Kondensationsprodukte aus Ethylenoxid und Alkylphenolen, aus Ethylenoxid und aliphatischen Alkoholen, die Fettsäureamide und die Polyoxyethylen- und Polyoxypropylenderivate.

10. Massen nach Anspruch 9, dadurch gekennzeichnet, daß das Tensid ein Natrium-alkylsulfosuccinat, ein Natrium-alkylnapthalinsulfonat oder ein sulfoniertes Olefin ist.

11. Massen nach einem der Ansprüche 9 und 10, dadurch gekennzeichnet, daß das Tensid ein Natrium-diisopropylnapthalinsulfonat ist.

12. Massen nach einem der Ansprüche 1 bis 11, dadurch gekennzeichnet, daß die in dem wasserliefernden Material vorhandene Menge Wasser einem Gewichtsverhältnis (Biogummi/Wasser) von 2,5 bis 1 entspricht.

13. Massen nach einem der Ansprüche 1 bis 12, dadurch gekennzeichnet, daß die Menge des wasserliefernden Materials einem Gewichtsverhältnis (wasserlieferndes Material, trocken/Wasser) von 0,3 bis 0,6 entspricht.

14. Massen nach einem der Ansprüche 1 bis 13, dadurch gekennzeichnet, daß die Menge an Tensid einem Verhältnis von Gewicht des Tensids zu Gesamtgewicht der Massen von 0 bis 0,10, vorzugsweise von 0,03 bis 0,07 entspricht.

15. Massen nach einem der Ansprüche 1 bis 14, dadurch gekennzeichnet, daß sie enthalten :

— 30 bis 70 Gew.-% Biogummi,
— 7 bis 40 Gew.-% wasserlieferndes Material,
— 0 bis 10 Gew.-% anionisches und/oder nichtionisches Tensid,
— 15 bis 37 Gew.-% Wasser.

16. Massen nach Anspruch 15, dadurch gekennzeichnet, daß sie enthalten :

— 50 bis 60 Gew.-% Biogummi,
— 8 bis 15 Gew.-% wasserlieferndes Material,
— 3 bis 7 Gew.-% anionisches und/oder nichtionisches Tensid,
— 24 bis 36 Gew.-% Wasser.

17. Verfahren zur Herstellung der Massen nach einem der Ansprüche 1 bis 16, dadurch gekennzeichnet, daß man das wasserliefernde Material mit gegebenenfalls daran adsorbiertem Wasser mit dem Biogummi trocken vermischt und gegebenenfalls ein anionisches und/oder nichtionisches Tensid zusetzt.

18. Verfahren nach Anspruch 17, dadurch gekennzeichnet, daß man das feste Tensid zu dem Gemisch bestehend aus dem wasserliefernden Material und dem Biogummi gibt.

19. Verfahren nach Anspruch 17, dadurch gekennzeichnet, daß man das flüssige Tensid an das wasserliefernde Material gleichzeitig mit dem Wasser oder darauf folgend adsorbiert und dann mit dem Biogummi mischt.

20. Sole erhalten durch Auflösen der Massen nach einem der Ansprüche 1 bis 16 in Wasser.

21. Sole nach Anspruch 20, dadurch gekennzeichnet, daß die Konzentration des Sols an erfindungsgemäßer Masse, bezogen auf den Biogummi 0,3 bis 2 % beträgt.

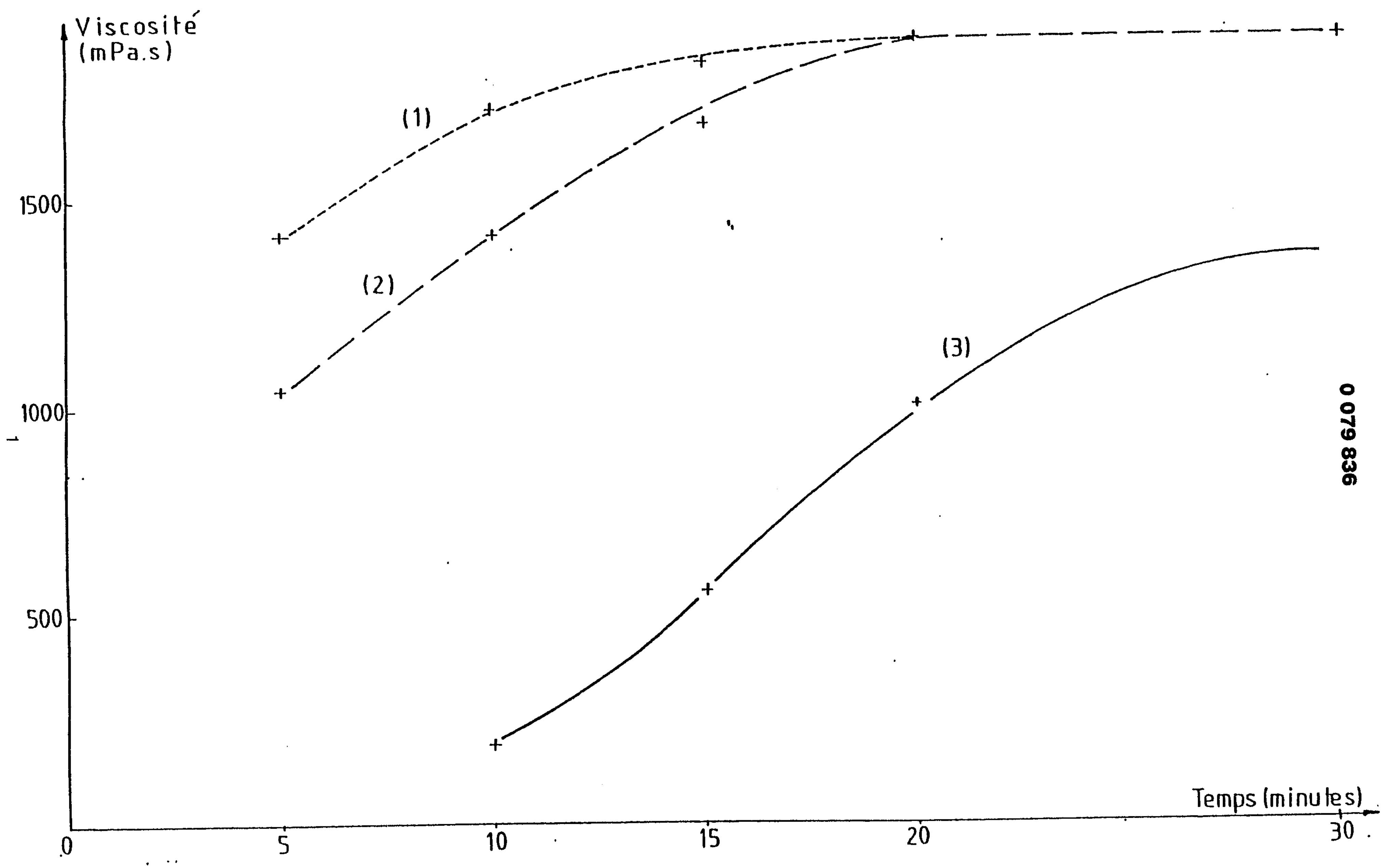
Viscosité
(mPa.s)
1500
1000
500
0
5
10
15
20
30
Temps (minutes)
(1)
(2)
(3)